# EUROPÄISCHE PATENTSCHRIFT

(11) **EP 2 720 771 B1**
(45) Veröffentlichungstag und Bekanntmachung des Hinweises auf die Patenterteilung: **11.01.2017**
(21) Anmeldenummer: 12734823.3
(22) Anmeldetag: 11.06.2012
(51) Int. Cl.: B01D 35/147, B01D 35/153, B01D 35/16

(54) **FLÜSSIGKEITSFILTER MIT EINEM EXZENTRISCHEN FLÜSSIGKEITSABLASSKANAL**
LIQUID FILTER WITH AN ECCENTRIC LIQUID DISCHARGE CHANNEL
FILTRE À LIQUIDE COMPORTANT UN CONDUIT D'ÉVACUATION DE LIQUIDE EXCENTRÉ

(30) Priorität: 20.06.2011 DE 102011077798
(43) Veröffentlichungstag der Anmeldung: 23.04.2014
(73) Patentinhaber: Hengst SE & Co. KG, 48147 Münster (DE)
(72) Erfinder: ARDES, Wilhelm, 59387 Ascheberg (DE)
(74) Vertreter: Linnemann, Winfried
(86) Internationale Anmeldenummer: PCT/EP2012/061017
(87) Internationale Veröffentlichungsnummer: WO 2012/175359

(56) Entgegenhaltungen:
- DE-A1-102009 049 868
- DE-A1-102009 054 523

## Beschreibung

Die vorliegende Erfindung betrifft einen Flüssigkeitsfilter, insbesondere Öl- oder Kraftstofffilter einer Brennkraftmaschine, mit einem Filtergehäuse und einem darin auswechselbar angeordneten Filtereinsatz, wobei das Filtergehäuse einen Rohflüssigkeitszulauf, einen zentralen Reinflüssigkeitsablauf und einen exzentrischen Flüssigkeitsablasskanal aufweist, wobei über dem Reinflüssigkeitsablauf ein zentrales Standrohr angeordnet ist, wobei der Filtereinsatz auf das Standrohr aufgesteckt ist, wobei der Filtereinsatz an seiner dem Flüssigkeitsablasskanal zugewandten Seite einen exzentrischen Verschlusszapfen aufweist und wobei Positioniermittel vorgesehen sind, die beim Aufstecken des Filtereinsatzes auf das Standrohr den Verschlusszapfen in Eingriff mit dem exzentrischen Flüssigkeitsablasskanal führen.

Ein Flüssigkeitsfilter der vorstehend genannten Art ist aus DE 10 2009 049 868 A1 bekannt. Bei diesem Flüssigkeitsfilter ist das Standrohr als rohrförmiger Dom ausgebildet und ein Teil des Filtergehäuses. Bei montiertem Filtereinsatz greift der rohrförmige Dom in einen Innenraum des Filtereinsatzes ein. An einem freien Ende des rohrförmigen Doms ist eine Führungskontur vorgesehen, die mit einem am Filtereinsatz angeordneten Führungselement zusammenwirkt, um bei der Montage des Filtereinsatzes den exzentrischen Dichtzapfen in eine zum exzentrischen Flüssigkeitsablasskanal passende Position zu führen.

Als nachteilig wird bei diesem bekannten Flüssigkeitsfilter angesehen, dass das Standrohr einstückig mit dem Filtergehäuse ausgeführt ist, was die Formgebung des Standrohrs auf relativ einfache Formen beschränkt, da üblicherweise das Filtergehäuses als Druck- oder Spritzgussteil aus Leichtmetall oder Kunststoff hergestellt wird und deshalb nur solche Konturen aufweisen kann, die aus einer Spritzform entformbar sind.

DE 10 2009 054 523 A1 zeigt ein Flüssigkeitsfilter mit einem Filtergehäuse, mit einem Ringfiltereinsatz und mit einem Deckel, wobei in einem Boden des Gehäuses ein exzentrischer Ablauf zum Entleeren des Gehäuses bei Entnahme des Filtereinsatzes angeordnet ist, wobei der Filtereinsatz aus einem von Stirnscheiben eingefassten Filterstoffkörper besteht, wobei an der dem Boden zugewandten Stirnscheibe ein Sperrelement für den Ablauf angeordnet ist und wobei am Filtereinsatz und am Gehäuse Positioniermittel vorgesehen sind, die beim Einsetzen des Filtereinsatzes in das Gehäuse das Sperrelement in Eingriff mit dem Ablauf führen. Weiter ist bei diesem Filter vorgesehen, dass das erste Positioniermittel eine schiefe Ebene ist, die a) auf dem Außenumfang eines im Inneren des Ringfiltereinsatzes liegenden Filtergehäuseteils oder b) auf dem Innenumfang des Ringfiltereinsatzes oder c) auf dem Außenumfang des Ringfiltereinsatzes oder d) auf dem Innenumfang des Filtergehäuses ausgebildet oder angeordnet ist und dass das zweite Positioniermittel eine radial vorragende Nase ist, die in Gegenüberstellung zur schiefen Ebene a) auf dem Innenumfang des Ringfiltereinsatzes oder b) auf dem Außenumfang des im Inneren des Ringfiltereinsatzes liegenden Filtergehäuseteils oder c) auf dem Innenumfang des Filtergehäuses oder d) auf dem Außenumfang des Ringfiltereinsatzes ausgebildet oder angeordnet ist, wobei unter Verdrehung des Ringfiltereinsatzes zum Filtergehäuse die schiefe Ebene und die Nase relativ zueinander aneinander entlang gleitend bewegbar sind und das Sperrelement in Eingriff mit dem Ablauf führen.

Für die vorliegende Erfindung stellt sich daher die Aufgabe, einen Flüssigkeitsfilter der eingangs genannten Art zu schaffen, bei dem fertigungstechnische Einschränkungen vermieden werden und bei dem die Montage dennoch einfach ist.

Die Lösung dieser Aufgabe gelingt erfindungsgemäß mit einem Flüssigkeitsfilter der eingangs genannten Art, welcher dadurch gekennzeichnet ist,
- dass das zentrale Standrohr ein mit dem Reinflüssigkeitsablauf durch Zusammenstecken verbindbares separates Bauteil ist,
- dass erste Positioniermittel am zentralen Reinflüssigkeitsablauf und an einem unteren Endbereich des Standrohrs vorgesehen sind, die beim Einstecken des Standrohrs in den Reinflüssigkeitsablauf das Standrohr in eine bestimmte Position in Umfangsrichtung relativ zum Filtergehäuse führen,
- dass zweite Positioniermittel am Außenumfang des Standrohrs und am Innenumfang des Filtereinsatzes vorgesehen sind, die beim Aufstecken des Filtereinsatzes auf das Standrohr den Filtereinsatz in eine bestimmte Position in Umfangsrichtung relativ zum Standrohr führen, und
- dass die ersten und zweiten Positioniermittel so aufeinander abgestimmt sind, dass der Verschlusszapfen am Filtereinsatz in Eingriff mit dem exzentrischen Flüssigkeitsablasskanal im Filtergehäuse tritt.

Vorteilhaft weist das erfindungsgemäße Flüssigkeitsfilter zwei verschiedene Positioniermittel auf, die zum einen das Standrohr relativ zum Filtergehäuse in einer bestimmten Position in Umfangsrichtung positionieren und die zum anderen den Filtereinsatz relativ zum Standrohr in einer bestimmten Position in Umfangsrichtung positionieren. Wesentlich ist dabei, dass die verschiedenen Positioniermittel so aufeinander abgestimmt sind, dass der Verschlusszapfen am Filtereinsatz relativ zu dem Flüssigkeitsablasskanal im Filtergehäuse passend positioniert wird. Das Standrohr kann somit als separates Einzelteil gefertigt werden, wodurch herstellungstechnische Einschränkungen wegfallen, die bei einer einstückigen Fertigung zusammen mit dem Filtergehäuse bestehen. Eine in Umfangsrichtung gesehen falsche Positionierung des Standrohrs bei dessen Montage im Filtergehäuse ist durch die ersten Positioniermittel ausgeschlossen. Die zweiten Positioniermittel sorgen für die nötige Ausrichtung des Filtereinsatzes in Umfangsrichtung relativ zum Filtergehäuse beim Einbauen des Filtereinsatzes, ohne dass unmittelbar zusammenwirkende Positioniermittel am Filtereinsatz und am Filtergehäuse erforderlich sind. Der Filtereinsatz ist ein üblicherweise automatisiert gefertigtes Massenteil, so dass innerhalb des automatischen Fertigungsablaufs die richtige Anordnung des filtereinsatzseitigen Positioniermittels relativ zum Verschlusszapfen einfach und insbesondere ohne manuelle Eingriffe zu realisieren ist. Bei Bedarf können innerhalb des Filtereinsatzes an dessen Einzelteilen auch noch eigene Positioniermittel vorgesehen sein. Insgesamt ist somit eine sehr einfache und dabei gegen Fehler gesicherte Montage des Flüssigkeitsfilters sowohl bei dessen Erstmontage als auch bei späteren Wartungen mit einem Filtereinsatzwechsel gewährleistet.

Eine vorteilhafte Weiterbildung des erfindungsgemäßen Flüssigkeitsfilters sieht vor, dass das Standrohr, der Filtereinsatz und ein Schraubdeckel des Filtergehäuses zu einer Einheit vormontierbar sind, die insgesamt unter selbsttätiger Findung von Verschlusszapfen und Flüssigkeitsablasskanal mit dem Filtergehäuse zu dem Flüssigkeitsfilter verbindbar ist. In einer solchen vormontierten Einheit ist der Filtereinsatz relativ zum Standrohr schon durch die zweiten Positioniermittel in Umfangsrichtung richtig positioniert. Durch das Verbinden der vormontierten Einheit mit dem Filtergehäuse gelangt das Standrohr, welches hier ein Teil der vormontierten Einheit ist, in Eingriff mit dem Reinflüssigkeitsablauf und wird durch die dort vorgesehenen ersten Positioniermittel relativ zum Filtergehäuse in Umfangsrichtung so positioniert, dass letztendlich der Verschlusszapfen am Filtereinsatz passend zum Flüssigkeitsablasskanal positioniert ist. Die vormontierte Einheit kann beispielsweise bei einem Zulieferbetrieb eines Automobilherstellers gefertigt und vormontiert und dann dem Auto-mobilhersteller zugeliefert werden, bei dem dann die vormontierte Einheit in einem einfachen Arbeitsschritt nur noch mit dem Filtergehäuse verbunden wird.

Für das richtige Positionieren des Standrohrs relativ zum Filtergehäuse ist in der Regel eine Drehung des Standrohrs um sich selbst relativ zu dem Filtergehäuse erforderlich. Um diese Drehung des Standrohrs beim Zusammenfügen der vormontierten Einheit mit dem Filtergehäuse zu erzeugen, ist zweckmäßig an dem Standrohr und dem Filtereinsatz und an dem Filtereinsatz und dem Filtergehäuseschraubdeckel jeweils eine axial in und außer Eingriff bringbare Rastmittelanordnung vorgesehen, wovon die Rastmittelanordnung zwischen dem Filtereinsatz und dem Filtergehäuseschraubdeckel eine auf ein vorgebbares Maß begrenzte Drehmomente übertragende, eine Drehung relativ zueinander gestattende Rastmittelanordnung ist. Innerhalb der vormontierten Einheit ist also die Rastmittelanordnung, welche den Schraubdeckel und den Filtereinsatz miteinander verbindet, die Rastmittelanordnung, welche ein begrenztes Drehmoment überträgt und eine relative Verdrehung von Filtergehäuseschraubdeckel und Filtereinsatz relativ zueinander erlaubt, während gleichzeitig der Filtereinsatz und das Standrohr innerhalb der vormontierten Einheit mittels der weiteren Rastmittelanordnung zwar ebenfalls miteinander verrastet, jedoch relativ zueinander nicht verdrehbar sind.

In einer konkreten weiteren Ausgestaltung ist bevorzugt vorgesehen, dass die ersten Positioniermittel filtergehäuseseitig durch einen Rohrsockel mit einer schräg und/oder gestuft verlaufenden, in einen axialen Schlitz übergehenden Oberseite und standrohrseitig durch eine radial nach außen vorragende Nase gebildet sind. In dieser Ausgestaltung sind die ersten Positioniermittel herstellungstechnisch einfach und zugleich in ihrer Funktion zuverlässig.

Eine weitere bevorzugte Ausgestaltung des Flüssigkeitsfilters schlägt vor, dass die zweiten Positioniermittel standrohrseitig durch ein Paar von symmetrisch zueinander schräg nach unten hin aufeinander zu laufenden, in einen axialen Schlitz übergehenden Führungsstegen und filtereinsatzseitig durch eine radial nach innen vorragende Nase gebildet sind. Hiermit wird auch für die zweiten Positioniermittel eine einfache Herstellbarkeit bei zuverlässiger Funktion gewährleistet.

Um die zuvor erwähnte, das filtereinsatzseitige Positioniermittel bildende Nase geschützt gegen äußere Einwirkungen unterzubringen, ist bevorzugt vorgesehen, dass der Filtereinsatz einen hohlzylindrischen Filterstoffkörper aufweist, in dessen hohlem Inneren ein gitterförmiger Stützkörper angeordnet ist, mit dem die radial nach innen vorragende Nase einstückig oder verbunden ist.

Um auch den Filtereinsatz des erfindungsgemäßen Flüssigkeitsfilters günstig fertigen zu können, schlägt die Erfindung vor, dass der Filtereinsatz zwei den hohlzylindrischen Filterstoffkörper stirnseitig einfassende Endscheiben aufweist und dass mit einer der Endscheiben der Verschlusszapfen einstückig oder verbunden ist.

Da bei dem erfindungsgemäßen Flüssigkeitsfilter das Standrohr ein separat gefertigtes Einzelteil ist, kann es relativ einfach mit zusätzlichen Funktionselementen ausgestattet werden. Hierzu ist bevorzugt vorgesehen, dass das Standrohr zumindest in der oberen Hälfte seiner Höhe durchbrochen ist und dass in einem oberen Endbereich des Standrohrs ein Filterumgehungsventil angeordnet ist. Das Filterumgehungsventil kann so besonders platzsparend und ohne aufwendige Montageschritte innerhalb des Flüssigkeitsfilters untergebracht werden.

Eine weitere Ausgestaltung schlägt dabei vor, dass an der/einer in Einbaulage oberen Stirnscheibe des Filtereinsatzes ein mit einem Ventilkörper des Filterumgehungsventils zusammenwirkender Ventilsitz ausgebildet ist. Auf diese Weise wird bei jedem Wechsel des Filtereinsatzes ein neuer Ventilsitz für das Filterumgehungsventil zur Verfügung gestellt, was für einen über lange Zeit sicheren und störungsfreien Betrieb des Filterumgehungsventils sorgt.

Weiter schlägt die Erfindung vor, dass in oder an einem unteren Bereich des Standrohrs ein Leerlaufsperrventil angeordnet ist. Hiermit erhält das Standrohr zusätzlich oder alternativ zu dem Filterumgehungsventil eine weitere Funktion.

Bevorzugt wirkt dabei ein Ventilkörper des Leerlaufsperrventils mit dem als Ventilsitz ausgebildeten unteren Ende des Standrohrs zusammen. In dieser Ausgestaltung der Erfindung hat das Standrohr die zusätzliche Funktion eines Ventilsitzes für das Leerlaufsperrventil, womit eine vorteilhaft einfache Fertigung und Montage auch im Hinblick auf das Leerlaufsperrventil erreicht werden.

Schließlich ist erfindungsgemäß noch vorgesehen, dass das Standrohr bei seinem Zusammenstecken mit dem Reinflüssigkeitsablauf derart mit dem Filtergehäuse verrastbar oder verklemmbar ist, dass bei einem Abziehen des Filtereinsatzes vom Standrohr das Standrohr im Reinflüssigkeitsablauf verbleibt. Diese Ausgestaltung ist insbesondere in Verbindung mit der oben beschriebenen vormontierten Einheit zweckmäßig, weil nach der Erstmontage des Filters später im Rahmen einer regelmäßigen Filterwartung nur der Filtereinsatz getauscht werden soll. Hierzu ist zweckmäßig die Lösekraft für die Verrastung oder Verklemmung zwischen Standrohr und Filtergehäuse ausreichend größer als die Lösekraft der Verrastung zwischen Filtereinsatz und Standrohr; zugleich ist zweckmäßig die Lösekraft der Verrastung zwischen Schraubdeckel und Filtereinsatz größer als die Lösekraft der Verrastung zwischen Filtereinsatz und Standrohr, aber kleiner als die Lösekraft der Verrastung oder Verklemmung zwischen Standrohr und Filtergehäuse. Die genannten Lösekraftverhältnisse sorgen dafür, dass bei einem Abnehmen des Schraubdeckels dieser den damit verrasteten Filtereinsatz mitnimmt und vom Standrohr abzieht, ohne dass dabei auch das Standrohr aus dem Filtergehäuse herausgezogen wird. Zugleich sorgt das Abziehen des Filtereinsatzes für ein Herausbewegen des Verschlusszapfens aus dem Flüssigkeitsablasskanal, wodurch das Filtergehäuse entleert wird und ein praktisch flüssigkeitsfreier Filtereinsatz aus dem Filtergehäuse entnommen werden kann.

Im Folgenden werden Ausführungsbeispiele der Erfindung anhand einer Zeichnung erläutert. Die Figuren der Zeichnung zeigen:
- Figur 1: einen Flüssigkeitsfilter in einem ersten Längsschnitt,
- Figur 2: den Flüssigkeitsfilter in einem zweiten, um 90° gegenüber Figur 1 verdrehten Längsschnitt,
- Figur 3: eine vormontierte Einheit aus einem Filtereinsatz, einem Standrohr und einem Filtergehäuseschraubdeckel, im Längsschnitt,
- Figur 4: das in Figur 2 und Figur 3 eingekreiste Detail in vergrößerter Darstellung,
- Figur 5: das Filtergehäuse des Flüssigkeitsfilters aus den Figuren 1 und 2 in einer aufgeschnittenen Ansicht,
- Figur 6: das Standrohr des Flüssigkeitsfilters aus den Figuren 1 und 2, in einer ersten Ansicht,
- Figur 7: das Standrohr aus Figur 6 in einer zweiten, gegenüber Figur 6 gedrehten Ansicht,
- Figur 8: das Filtergehäuse in aufgeschnittener Ansicht, zusammen mit dem Standrohr, zu Beginn des Einbaus des Standrohrs,
- Figur 9: das in Figur 8 eingekreiste Detail in vergrößerter Darstellung,
- Figur 10: das Filtergehäuse in aufgeschnittener Ansicht, zusammen mit dem Standrohr, während einer zweiten Phase des Einbaus des Standrohrs,
- Figur 11: das in Figur 10 eingekreiste Detail in vergrößerter Darstellung,
- Figur 12: das Filtergehäuse in aufgeschnittener Ansicht, zusammen mit dem Standrohr, am Ende des Einbaus des Standrohrs,
- Figur 13: das in Figur 12 eingekreiste Detail in vergrößerter Darstellung,
- Figur 14: das Filtergehäuse des Flüssigkeitsfilters in einer gegenüber der Figur 5 geänderten Ausführung, in einer aufgeschnittenen Ansicht,
- Figur 15: ein zu dem Filtergehäuse aus Figur 14 passendes Standrohr, in einer ersten Ansicht, und
- Figur 16: das Standrohr aus Figur 15 in einer zweiten, gegenüber Figur 15 gedrehten Ansicht.

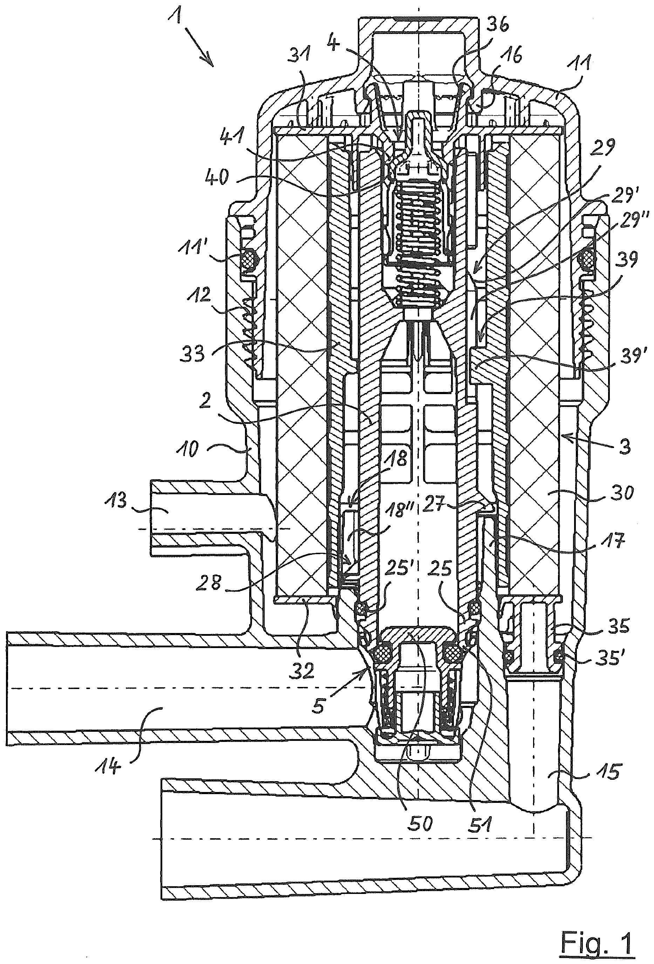

Figur 1 der Zeichnung zeigt einen Flüssigkeitsfilter 1, insbesondere Öl- oder Kraftstofffilter einer Brennkraftmaschine, in einem Längsschnitt in seinem vollständig montierten, betriebsbereiten Zustand. Der Flüssigkeitsfilter 1 ist als stehender Filter mit einem becherförmigen Filtergehäuse 10 und einem oberseitigen Schraubdeckel 11 ausgeführt. Im Inneren des Filtergehäuses 10 ist ein Filtereinsatz 3 auf einem Standrohr 2 angeordnet. Das Standrohr 2 ist mit seinem unteren Ende 51 in einen Rohrsockel 17, der ein Teil des Filtergehäuses 10 ist, dichtend eingesteckt.

Das Filtergehäuse 10 besitzt einen Rohflüssigkeitszulauf 13, der hier in Form eines Rohrstutzens ausgeführt ist und der in Radialrichtung von außen her in das Filtergehäuse 10 einmündet. Parallel zum Rohflüssigkeitszulauf 13 verläuft zu diesem nach unten versetzt ein Reinflüssigkeitsablauf 14, der ebenfalls als Rohrstutzen ausgeführt ist und in Radialrichtung vom Filtergehäuse 10 weg führt. Ganz unten in Figur 1 ist am Filtergehäuse 10 ein Flüssigkeitsablaufkanal 15 angeordnet, der an einer radial exzentrischen Stelle vom Boden des Inneren des Gehäuses 10 ausgeht und dann in einen zu den Kanälen 13 und 14 parallelen Verlauf umschwenkt.

Das Standrohr 2 ist über einen unteren Teil seiner Höhe als geschlossenes Rohr und darüber durchbrochen ausgeführt. In einem oberen Endbereich des Standrohrs 2 ist in diesem ein Filterumgehungsventil 4 angeordnet, welches einen durch eine Feder in Schließrichtung vorbelasteten Ventilkörper 41 aufweist. Der Ventilkörper 40 wirkt mit einem Ventilsitz 41 zusammen, der an einer oberen Stirnscheibe 31 des Filtereinsatzes 3 angeformt ist. Das Filterumgehungsventil 4 erlaubt eine Durchströmung des Flüssigkeitsfilters 1 unter Umgehung des Filtereinsatzes 3, wenn dieser durch Schmutzpartikel verstopft ist.

Am unteren Ende des Standrohrs 2 ist im Reinflüssigkeitsablauf 14 ein Leerlaufsperrventil 5 angeordnet, welches einen Ventilkörper 50 aufweist, der mit einem am unteren Ende 25 des Standrohrs 2 ausgebildeten Ventilsitz 51 zusammenwirkt. Das Leerlaufsperrventil 5 verhindert ein Leerlaufen des Flüssigkeitsfilters 1, wenn keine Flüssigkeit durch eine externe Fördereinrichtung, wie Pumpe, durch das Flüssigkeitsfilter 1 gefördert wird, was beispielsweise bei Stillstand einer zugehörigen Brennkraftmaschine der Fall ist.

Die untere Stirnseite des Filtereinsatzes 3 wird durch eine zweite, untere Stirnscheibe 32 gebildet, wobei die beiden Stirnscheiben 31 und 32 zwischen sich einen hohlzylindrischen Filterstoffkörper 30 einfassen. Im Inneren des Filterstoffkörpers 30 ist zwischen den beiden Stirnscheiben 31 und 32 ein hohlzylindrischer, gitterförmiger Stützkörper 33 angeordnet, der den hohlzylindrischen Filterstoffkörper 30 bei seiner Durchströmung radial innen abstützt, um ein Kollabieren des Filterstoffkörpers 30 bei seiner Durchströmung zu verhindern. Einstückig mit der unteren Stirnscheibe 32 ist exzentrisch an dieser ein axial nach unten vorstehender Verschlusszapfen 35 ausgebildet, der einen Dichtring 35' trägt und dichtend in den Flüssigkeitsablasskanal 15 eingreift.

Der das Filtergehäuse 10 oberseitig abschließende Schraubdeckel 11 ist mittels eines Schraubgewindes 12 unter Zwischenlage eines Dichtrings 11' mit dem Filtergehäuse 10 verschraubt. In einem zentralen oberen Bereich des Deckels 11 sind an dessen Unterseite Rastmittel 16, hier in Form von Rasthaken, einstückig angeformt. Diese Rastmittel 16 wirken mit Rastmitteln 36 zusammen, die in der Oberseite der oberen Stirnscheibe 31 des Filtereinsatzes 3 einstückig angeformt sind. Die Rastmittel 16 und 36 sind in Axialrichtung in und außer Eingriff bringbar und zudem so ausgeführt, dass sie in Umfangsrichtung ein begrenztes Drehmoment übertragen können, wobei der Schraubdeckel 11 und der Filtereinsatz 3 relativ zueinander verdrehbar sind, wenn das begrenzte Drehmoment überschritten wird.

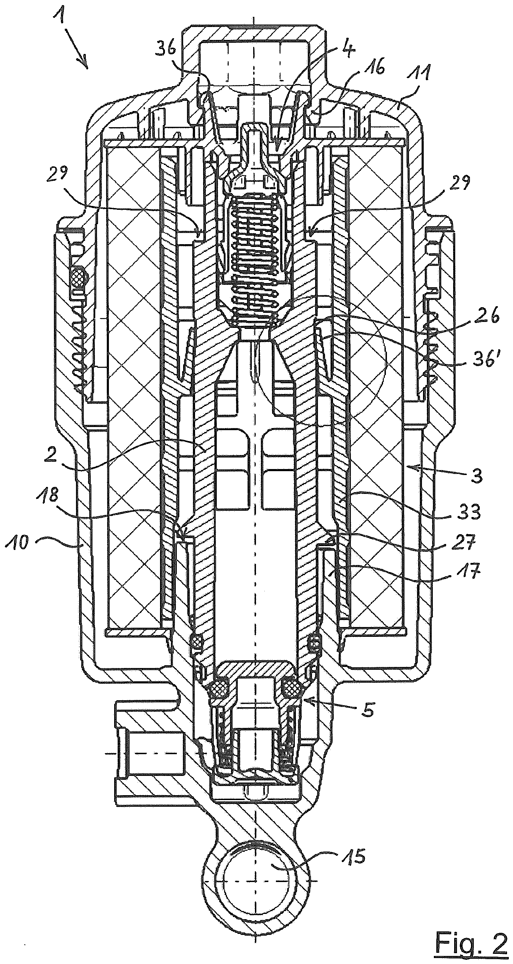

Weitere Rastmittel, die in Figur 1 nicht sichtbar sind, sind zwischen dem Filtereinsatz 3 und dem Standrohr 2 vorgesehen und werden weiter unten anhand der Figur 2 noch erläutert.

Um zu gewährleisten, dass der Verschlusszapfen 35 bei der Montage des Flüssigkeitsfilters 1 in eine zum Flüssigkeitsablasskanal 15 eingriffsgerechte Position gelangt, sind an dem Flüssigkeitsfilter 1 erste und zweite Positioniermittel vorgesehen. Dabei befinden sich erste Positioniermittel 18 und 28 am Rohrsockel 17 und am Standrohr 2 und zweite Positioniermittel 29 und 39 am Standrohr 2 und am Filtereinsatz 3.

Das filtergehäuseseitige erste Positioniermittel 18 ist hier durch eine rampenartige, in einen axialen Schlitz 18" übergehenden Oberseite 18' des Rohrsockels 17 gebildet. Im unteren Bereich des Standrohrs 2 ist an dessen Außenumfang als standrohrseitiges erstes Positioniermittel 28 eine radial nach außen vorragende Nase 28' angeformt, die bei der Montage des Standrohrs 2 dieses in Umfangsrichtung gesehen in eine definierte Position relativ zum Filtergehäuse 10 führt. In dieser Position ist das Standrohr 2 in Figur 1 dargestellt. Mittels eines Dichtrings 21' ist das Standrohr 2 gegen das Filtergehäuse 10 abgedichtet und außerdem zugleich mit dem Filtergehäuse 10 verrastet oder verklemmt, um nach einem einmaligen Einstecken des Standrohrs 2 in den Rohrsockel 17 ein Herausziehen des Standrohrs 2 bei einem Filtereinsatzwechsel zu vermeiden. Bei Bedarf können hier zusätzlich zu dem Dichtring 21' eigene Rast- oder Klemmelemente vorgesehen sein.

Als standrohrseitiges zweites Positioniermittel 29 ist in dessen oberem Bereich am Außenumfang des Standrohrs 2 eine Anordnung von zwei symmetrisch schräg nach unten aufeinander zu verlaufenden, in einen axialen Schlitz 29" übergehenden Führungsstegen 29' angeformt. Als filtereinsatzseitiges zweites Positioniermittel 39 ist hier am Innenumfang des Stützkörpers 33 des Filtereinsatzes 3 eine radial nach innen vorragende Nase 39' vorgesehen. Die zweiten Positioniermittel 29 und 39 sorgen dafür, dass bei einem Aufstecken des Filtereinsatzes 3 auf das Standrohr 2 der Filtereinsatz 3 in Umfangsrichtung gesehen eine definierte Position relativ zu dem Standrohr 2 einnimmt. Die ersten Positioniermittel 18 und 28 und die zweiten Positioniermittel 29 und 39 sind dabei so aufeinander abgestimmt, dass im zusammengebauten Zustand des Flüssigkeitsfilters 1, wie in Figur 1 gezeigt, der Verschlusszapfen 35 an der unteren Stirnscheibe 32 des Filtereinsatzes 3 zwangsweise in die zum Flüssigkeitsablasskanal 15 eingriffsgerechte Position gelangt.

Im Betrieb des Flüssigkeitsfilters 1 strömt eine zu filternde Flüssigkeit durch den Rohflüssigkeitszulauf 13 in den radial außerhalb des Filterstoffkörpers 30 des Filtereinsatzes 3 liegenden Bereich des Filtergehäuses 10. Von dort durchströmt die Flüssigkeit den Filterstoffkörper 30 radial von außen nach innen, wobei der Stützkörper 33 den Filterstoffkörper 30 gegen ein Kollabieren abstützt. Aus dem Inneren des Filtereinsatzes 3 strömt die nun gefilterte Flüssigkeit nach innen und unten durch das Standrohr 2 in den Reinflüssigkeitsablauf 14. Der Flüssigkeitsablasskanal 15 ist im Betrieb des Flüssigkeitsfilters 1 durch den Verschlusszapfen 35 flüssigkeitsdicht verschlossen.

Im Rahmen einer Wartung des Flüssigkeitsfilters 1 mit einem Wechsel des Filtereinsatzes 3 wird der Schraubdeckel 11 vom Filtergehäuse 10 abgeschraubt, wobei der Schraubdeckel 11 über die Rastmittel 16 und 36 den Filtereinsatz 3 mitnimmt und vom Standrohr 2 abzieht. Zugleich wird dabei der Verschlusszapfen 35 aus dem Flüssigkeitsablasskanal 15 herausgezogen, was zu einem Entleeren des Filtergehäuses 10 von Flüssigkeit führt. Der aus dem Gehäuse 10 entnommene Filtereinsatz 3 ist dann praktisch frei von Resten der Flüssigkeit.

Die Figur 2 der Zeichnung zeigt den Flüssigkeitsfilter 1 aus Figur 1 in einem gegenüber der Figur 1 um etwa 90° verdrehten zweiten Längsschnitt. Den äußeren Teil des Flüssigkeitsfilters 1 bildet dessen Filtergehäuse 10 mit dem Schraubdeckel 11. Im Inneren des Flüssigkeitsfilters 1 ist der Filtereinsatz 3 auf dem Standrohr 2 angeordnet. Das Standrohr 2 ist in den Rohrsockel 17 eingesteckt. Das Standrohr 2 kann alternativ auch außen auf den Rohrsockel 17 aufgesteckt sein.

Im oberen Bereich des Standrohrs 2 liegt das Filterumgehungsventil 4. Am unteren Ende des Standrohrs 2 ist das Leerlaufsperrventil 5 sichtbar.

Die Oberseite des Rohrsockels 17 bildet das filtergehäuseseitige erste Positioniermittel 18. Das standrohrseitige erste Positioniermittel ist in Figur 2 nicht sichtbar, da es außerhalb der Schnittebene liegt. Im oberen Bereich des Standrohrs 2 sind an dessen Außenumfang die standrohrseitigen zweiten Positioniermittel 29 sichtbar; das zugehörige zweite Positioniermittel des Filtereinsatzes 3 ist hier wegen seiner Lage außerhalb der Schnittebene nicht sichtbar.

Wie oben schon erläutert, sind der Filtereinsatz 3 und der Schraubdeckel 11 über die Rastmittel 16 und 36 miteinander so verrastet, dass der Deckel 11 axiale Zug- und Schubkräfte und ein begrenztes Drehmoment in Umfangsrichtung auf den Filtereinsatz 3 übertragen kann. Wenn das begrenzte Drehmoment überschritten wird, tritt eine relative Verdrehung des Schraubdeckels 11 relativ zum Filtereinsatz 3 auf. Mittels weiterer Rastmittel 26 und 36' sind der Filtereinsatz 3 und das Standrohr 2 miteinander so verrastet, dass das Standrohr 2 gegen ein Herausfallen aus dem Filtereinsatz 3 gesichert ist, solange das Standrohr 2 nur mit dem Filtereinsatz 3, jedoch noch nicht mit dem Filtergehäuse 10 verbunden ist. Dabei sind die zweiten Rastmittel 26 am Standrohr 2 und 36' am Stützkörper 33 des Filtereinsatzes 3 so ausgeführt, dass sie begrenzte axiale Zugkräfte übertragen können.

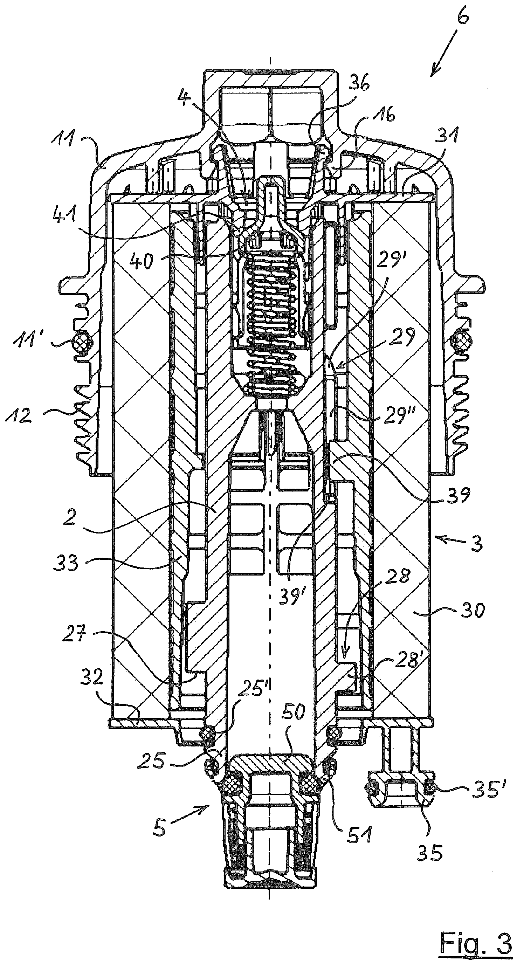

Die vorstehend beschriebenen Rastmittel erlauben es, den Schraubdeckel 11, den Filtereinsatz 3 und das Standrohr 2 zu einer vormontierten Einheit 6 miteinander zu verbinden, wie sie in der Figur 3 in einem Längsschnitt dargestellt ist. Zum Bilden dieser vormontierten Einheit 6 werden, in beliebiger Reihenfolge, der Schraubdeckel 11 und der Filtereinsatz 3 sowie das Standrohr 2 und der Filtereinsatz 3 miteinander durch axiales Zusammenstecken verbunden und verrastet, wobei die ersten Rastmittel 16 und 36 sowie die zweiten, in Figur 3 nicht sichtbaren, in Figur 2 gezeigten Rastmittel 26 und 36' in Eingriff miteinander treten. Beim Verbinden von Standrohr 2 und Filtereinsatz 3 miteinander gelangen auch deren Positioniermittel 29 und 39 in Eingriff miteinander und führen den Filtereinsatz 3 relativ zum Standrohr 2 in eine in Umfangsrichtung gesehen definierte Position. Im miteinander verrasteten Zustand halten die Rastmittel 16 und 36 sowie 26 und 36' die einzelnen Teile der Baueinheit 6 ausreichend sicher zusammen, so dass die Baueinheit 6 als Ganzes in einem nachfolgenden Montagevorgang, der auch an einem anderen Ort stattfinden kann, mit dem Filtergehäuse verbunden werden kann.

Zum Verbinden der vormontierten Einheit 6 mit dem Filtergehäuse 10 wird die Einheit 6 von oben her in das oberseitig offene Filtergehäuse 10 eingeführt, wobei die ersten Positioniermittel 18 und 28 dafür sorgen, dass das Standrohr 2 in Umfangsrichtung gesehen in eine definierte Position relativ zum Filtergehäuse 10 gelangt. In den allermeisten Fällen wird dabei, da die Position des Standrohrs 2 relativ zum Filtergehäuse 10 zu Beginn der Montage völlig zufällig ist, das Standrohr 2 relativ zum Filtergehäuse 10 noch nicht die gewünschte definierte Position einnehmen. Durch Verdrehen des Schraubdeckel 11, der über die Rastmittel 16 und 36 mit dem Filtereinsatz 3 verbunden ist, wird das verdrehfest mit dem Filtereinsatz 3 verbundene Standrohr 2 um sich selbst gedreht, bis die ersten Positioniermittel 18 und 28 in eine eingriffsgerechte Stellung relativ zueinander gelangen. Sobald diese eingriffsgerechte Stellung erreicht ist, wird ein weiteres Drehen des Standrohrs 2 durch die Positioniermittel 18 und 28 unterbunden und nur noch der Deckel 11 wird bei seinem weiteren Verdrehen zum weiteren Einschrauben in das Schraubgewinde 12 relativ zum Filtereinsatz 3 und zum Standrohr 2 verdreht, ohne dass sich dabei das Standrohr 2 selbst mit dreht. Für das Verbinden der vormontierten Einheit 6 mit dem Filtergehäuse 10 genügt also das Verschrauben des Schraubdeckel 11 mit dem Filtergehäuse 10, wobei automatisch gewährleistet ist, dass der Verschlusszapfen 35 am Filtereinsatz 3 in seine in Figur 1 sichtbare, zum Flüssigkeitsablasskanal 15 passende Position gelangt.

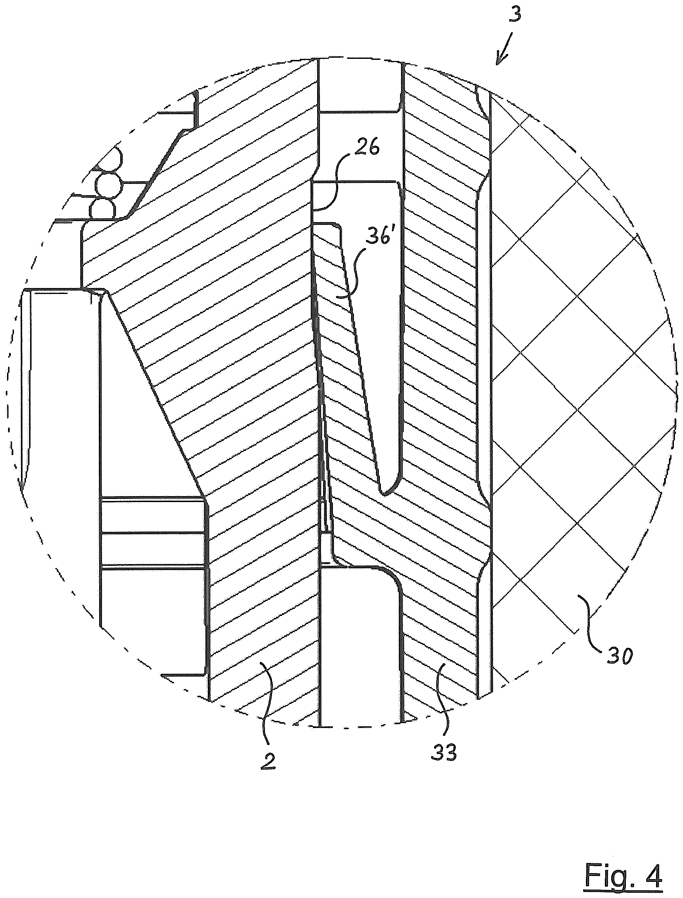

In Figur 4 ist das in Figur 2 und Figur 3 eingekreiste Detail vergrößert dargestellt. Hier ist das Zusammenwirkenden des Rastmittels 26 des Standrohrs 2 und des Rastmittels 36' des Filtereinsatzes 3 besonders deutlich erkennbar. Konkret ist das Rastmittel 26 als radial nach innen leicht zurückspringende Eintiefung des Außenumfangs des Standrohrs 2 ausgeführt. Das Rastmittel 36' am Filtereinsatz 3 ist hier konkret in Form mehrerer in Umfangsrichtung voneinander beabstandet angeordneter Rastzungen ausgeführt. Die das Rastmittel 36' bildenden Rastzungen sind hier einstückig mit dem den Filterstoffkörper 30 radial innen abstützenden Stützkörper 33 des Filtereinsatzes 3 ausgebildet, wozu der Stützkörper 33 zweckmäßig aus einem elastischen Kunststoff besteht.

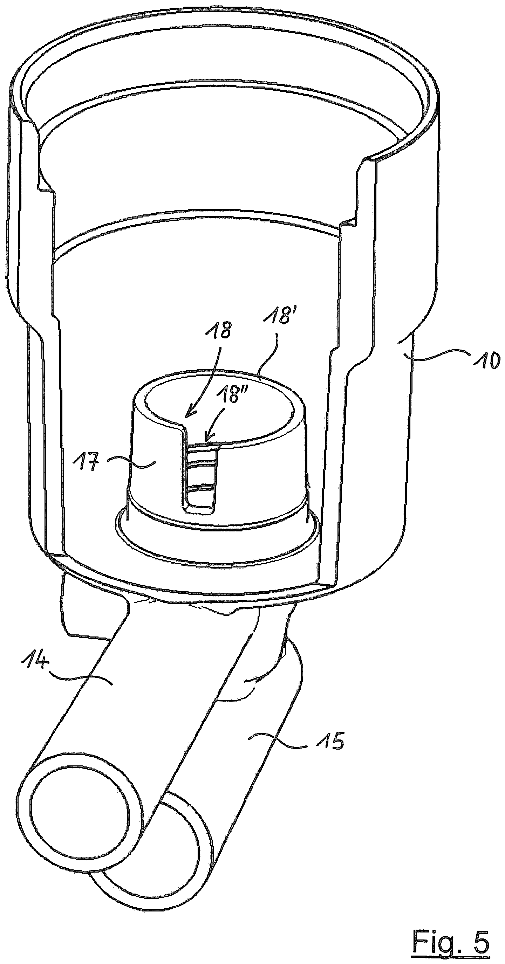

Figur 5 zeigt das Filtergehäuse 10 des Flüssigkeitsfilters 1 aus den Figuren 1 und 2 für sich, wobei das Gehäuse 10 hier in einer teilweise aufgeschnittenen Ansicht dargestellt ist. Das Filtergehäuse 10 hat eine becherförmige Grundform. In Zentrum des Filtergehäuses 10 ist an dessen Boden der nach oben vorstehende Rohrsockel 17 angeformt. Die obere Stirnseite des Rohrsockel 17 bildet das erste, filtergehäuseseitige Positioniermittel 18. Konkret ist die Oberseite 18' als schraubenlinienförmige Rampe ausgebildet, wobei die Oberseite 18' in einem Bereich zwischen dem höchsten und dem niedrigsten Punkt der Oberseite 18' in einen axialen Schlitz 18" übergeht.

Durch das Innere des Rohrsockels 17 verläuft der Reinflüssigkeitsablauf 14 für gefilterte Flüssigkeit, der weiter unten in einen radial nach außen verlaufenden Rohrstutzen übergeht. Unterhalb des Reinflüssigkeitsablaufs 14 verläuft der Flüssigkeitsablasskanal 15.

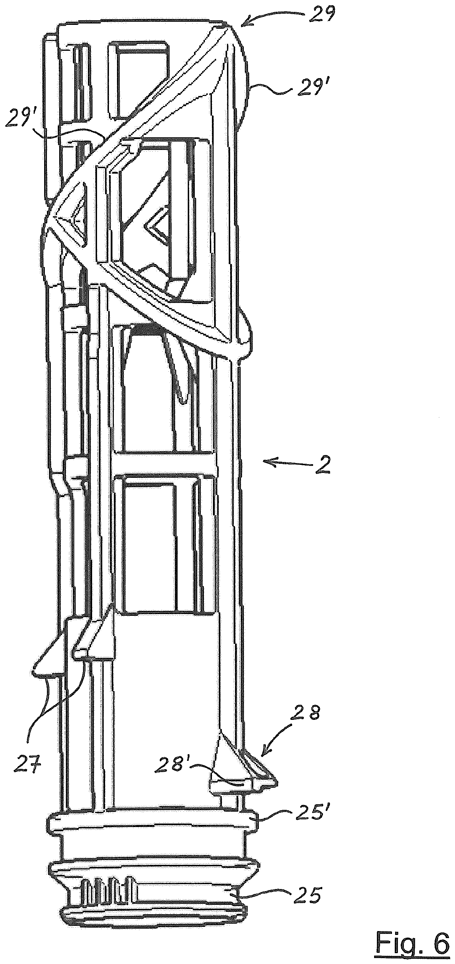

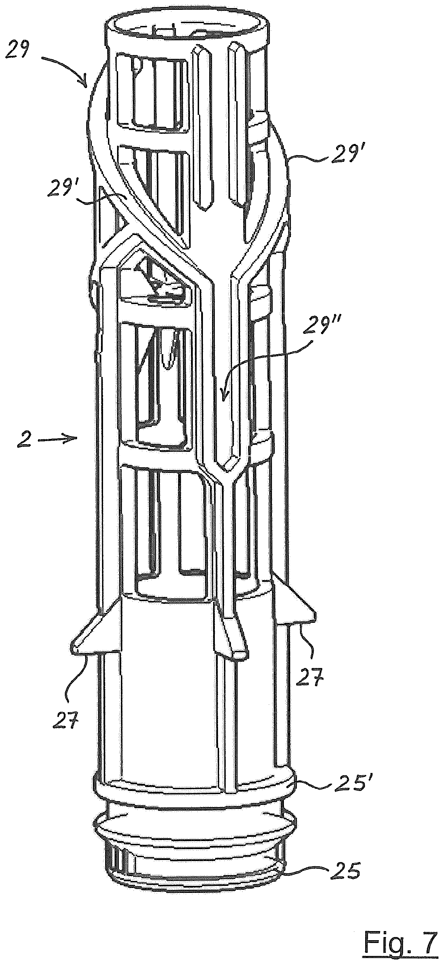

In den Figuren 6 und 7 ist das Standrohr 2 des Flüssigkeitsfilters 1 aus den Figuren 1 und 2 in zwei verschiedenen, gegeneinander verdrehten Ansichten gezeigt. Über den unteren Teil seiner Höhe ist das Standrohr 2 geschlossen; darüber ist das Standrohr 2 gitterartig durchbrochen ausgeführt. Mit seinem unteren Ende 25 ist das Standrohr 2 in den Rohrsockel des Filtergehäuses einsteckbar, wobei der Dichtring 25' für eine flüssigkeitsdichte Verbindung sorgt.

Nahe dem unteren Ende 25 des Standrohrs 2 ist in Figur 6 das standrohrseitige erste Positioniermittel 28 in Form der radial nach außen vorstehenden Nase 28' sichtbar. In einem axialen Abstand darüber sind am Außenumfang des Standrohrs 2 mehrere radial nach außen vorstehende, ebenfalls nasenförmige Anschläge 27 angeformt. Diese Anschläge 27 stehen bei fertig montiertem Flüssigkeitsfilter 1 auf der Oberseite des Rohrsockels des Filtergehäuses auf.

Im oberen Bereich des dort gitterförmig ausgeführten Standrohrs 2 ist das standrohrseitige zweite Positioniermittel 29 angeordnet, welches durch zwei zueinander symmetrisch über den Außenumfang des Standrohrs 2 von oben schräg nach unten in einander entgegengesetzten Umfangsrichtungen aufeinander zu verlaufende Führungsstege 29' gebildet ist. Die Führungsstege 29' wirken mit dem zweiten Positioniermittel am Innenumfang des weiter oben schon beschriebenen Filtereinsatzes 3 zusammen. Je nach der Ausgangsposition, in der das filtereinsatzseitigen Positioniermittel auf einen der Führungsstege 29' trifft, wird der Filtereinsatz 3 bei seiner Bewegung auf dem Standrohr 2 nach unten entweder nach rechts oder nach links verdreht, um ihn relativ zum Standrohr 2 in die definierte Position zu bringen.

In Figur 7 ist erkennbar, wie die beiden das Positioniermittel 29 bildenden Führungsstege 29' zu dem axial verlaufenden Schlitz 29" zusammenlaufen. Sobald das filtereinsatzseitige Positioniermittel in den Schlitz 29" eingelaufen ist, ist ein Verdrehen von Filtereinsatz 3 und Standrohr 2 relativ zueinander gesperrt; ein weiteres axiales Verschieben relativ zueinander bleibt aber möglich.

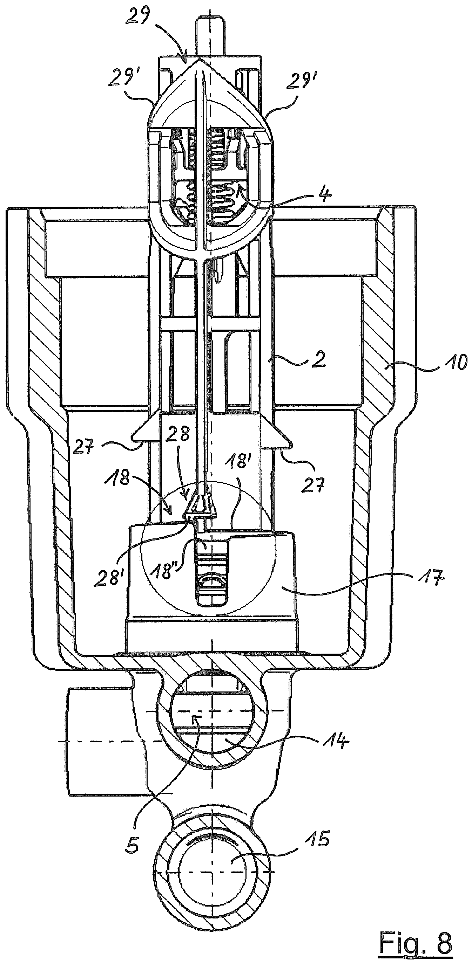

Figur 8 zeigt das Filtergehäuse 10 zusammen mit dem Standrohr 2 zu Beginn des gegenseitigen Verbindens. Beim axialen Einführen des Standrohrs 2 mit seinem unteren Ende in den Rohrsockel 17 trifft die das erste Positioniermittel 28 am Standrohr 2 bildende Nase 28' an einer in Umfangsrichtung zufälligen, beliebigen Stelle auf die Oberseite 18' des Rohrsockels 17. Durch Verdrehen des Standrohrs 2 in Uhrzeigersinn, wie dies entweder manuell direkt am Standrohr 2 oder indirekt durch Verdrehen des Schraubdeckels 11 hervorgerufen werden kann, wandert die Nase 28' entlang der Oberseite 18' des Rohrsockels 17, bis die Nase 28' in den Bereich des Schlitzes 18" gelangt.

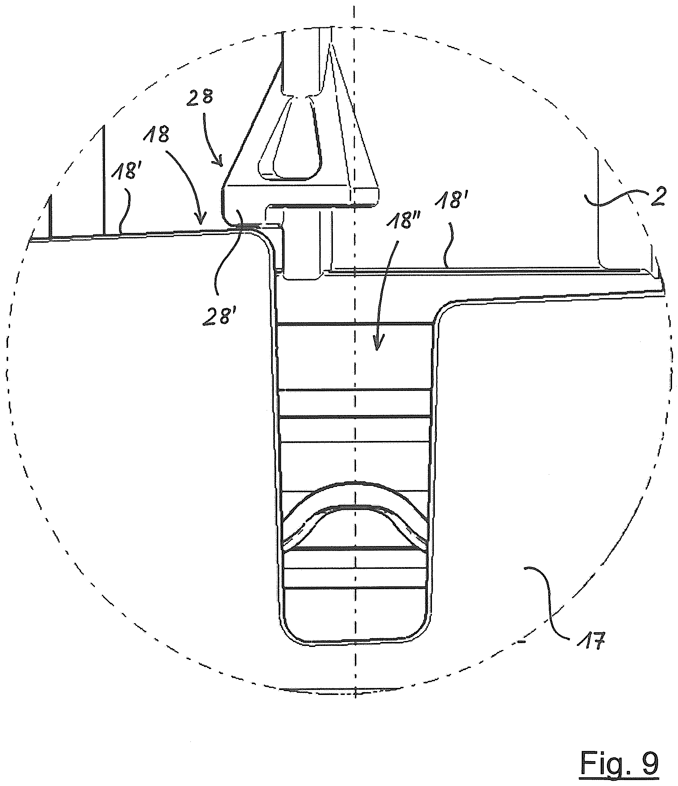

Der in Figur 8 dargestellte Zustand ist in Figur 9 nochmals als vergrößertes Detail dargestellt. Die Nase 28' befindet sich hier gerade links neben dem Schlitz 18" und liegt auf dem höchsten Bereich der Oberseite 18' des Rohrsockels 17 auf. Im Hintergrund ist der weitere Verlauf der Oberseite 18' des Rohrsockels 17 erkennbar. Dem Betrachter zugewandt ist wieder der axialen Schlitz 18" im Rohrsockel 17.

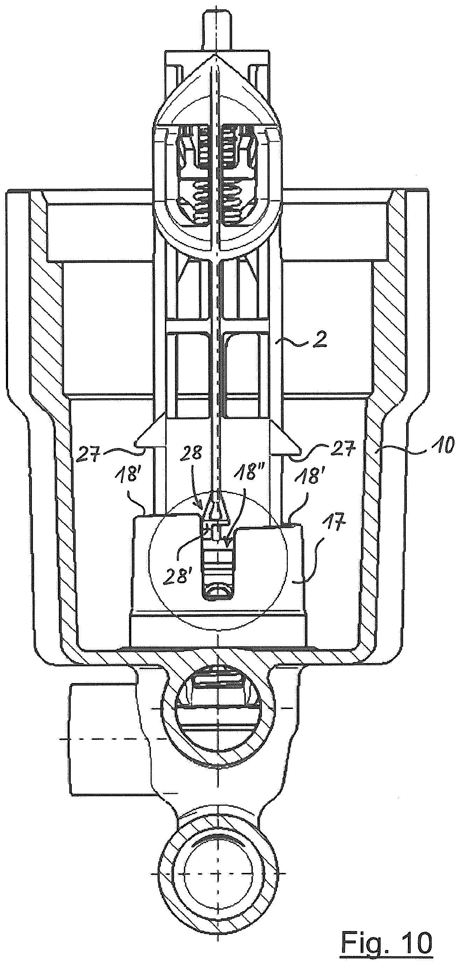

In Figur 10 ist das Standrohr 2 in einer Position dargestellt, in der die Nase 28' nach einer Drehung des Standrohrs 2 um annähernd 180° gegen die in Figur 10 linke Begrenzung des axialen Schlitz des 18" anschlägt, wodurch ein weiteres Verdrehen des Standrohrs 2 relativ zum Rohrsockel 17 und zum übrigen Filtergehäuse 10 gesperrt ist.

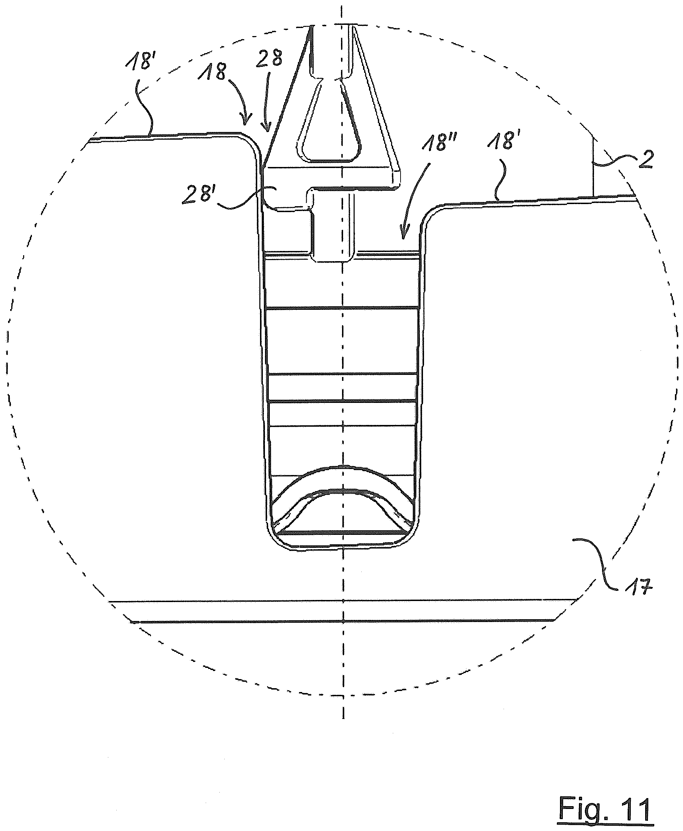

Auch diese Position der Nase 28' ist in Figur 11 nochmals als vergrößertes Detail gezeigt.

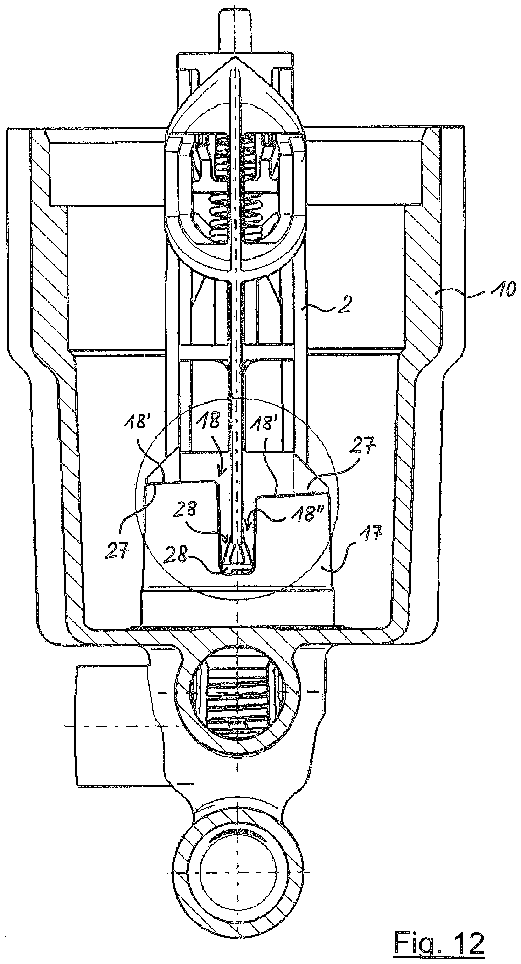

In Figur 12 ist das Standrohr 2 ohne weiteres Verdrehen relativ zum Rohrsockel 17 nach unten in seine Montage-Endposition verschoben. In dieser Endposition liegt die Nase 28' am unteren Ende des Schlitzes 18". Gleichzeitig liegen die Anschläge 27 auf der Oberseite 18' des Rohrsockels 17 auf.

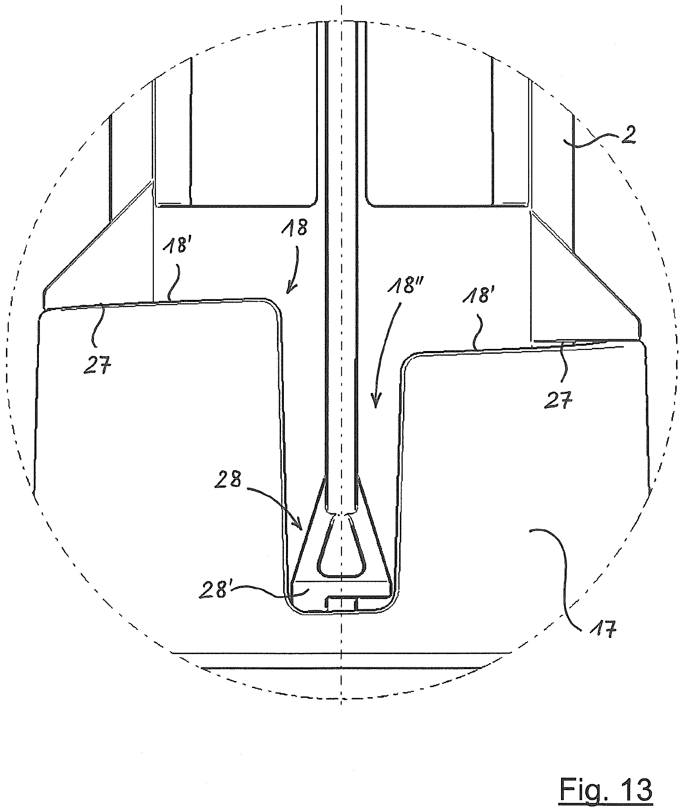

In Figur 13 ist das in Figur 12 eingekreiste Detail wieder vergrößert dargestellt. Hinsichtlich der Bezugsziffern in den vergrößert dargestellten Details nach den Figuren 9, 11 und 13 wird auf die Beschreibung der Figuren 8, 10 und 12 verwiesen.

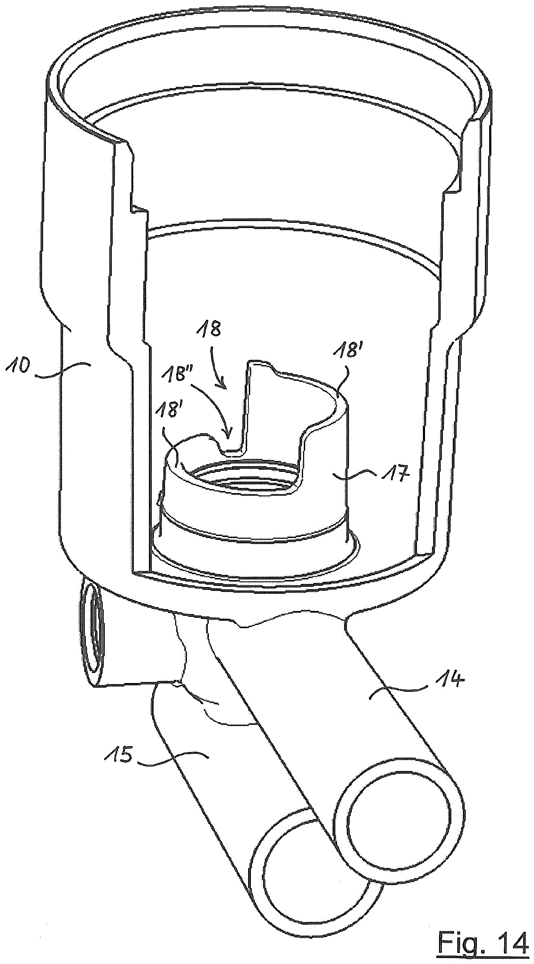

In Figur 14 ist eine alternative Ausführung des Filtergehäuses 10 dargestellt, wobei sich das Filtergehäuse 10 nach Figur 14 von dem Filtergehäuse 10 nach Figur 5 durch die Ausführung der ersten Positioniermittel 18 am Rohrsockel 17 unterscheidet. Charakteristisch für die Positioniermittel 18 am Rohrsockel 17 ist bei der Ausführung des Filtergehäuses 10 nach Figur 14, dass die Oberseite 18' in zwei Abschnitte unterschiedlicher Höhe unterteilt ist, wobei sich zwischen den Abschnitten die Höhe in Form von Stufen sprunghaft ändert. Im Uhrzeigersinn gesehen an der Stufe vom niedrigen Abschnitt zum hohen Abschnitt der Oberseite 18' ist der axial durch den Rohrsockel 17 verlaufende Schlitz 18" angeordnet. In seinen übrigen Teilen entspricht das Filtergehäuse 10 der Ausführung nach Figur 5.

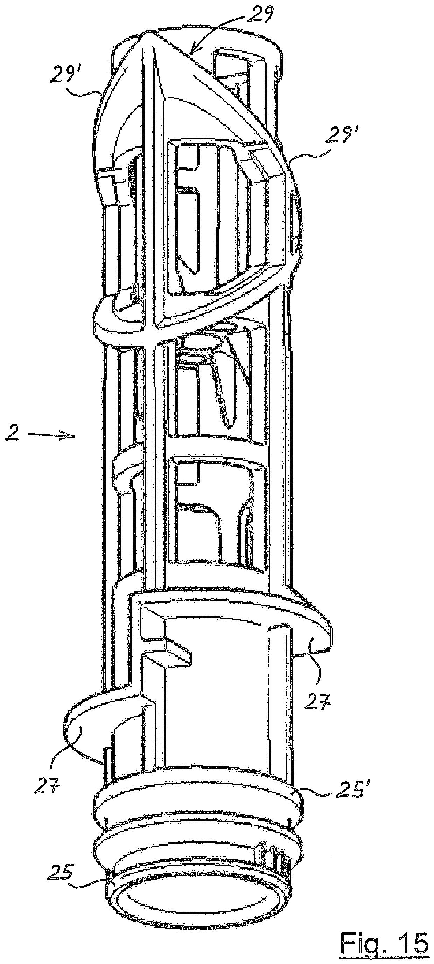

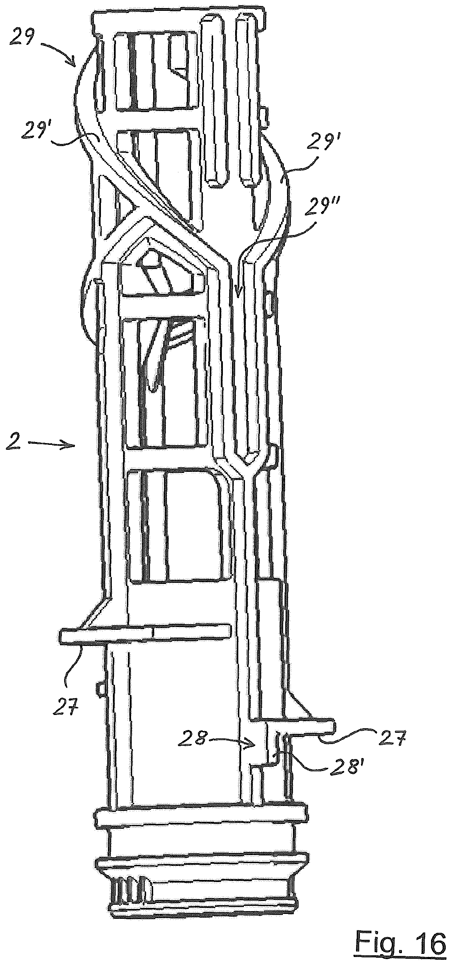

In den Figuren 15 und 16 ist in zwei verschiedenen Ansichten ein Standrohr 2 gezeigt, welches zu dem Filtergehäuse 10 nach Figur 14 passt. In Anpassung an die Ausgestaltung des Rohrsockels 17 sind auch die Anschläge 27 nahe dem unteren Ende 25 des Standrohrs 2 abgestuft ausgeführt. Zwischen dem unteren Ende 25 und den Anschlägen 27 des Standrohrs 2 ist der Dichtring 25' angeordnet. Im oberen Teil des Standrohrs 2 ist dieses wieder gitterförmig ausgeführt und dort mit den zweiten Positioniermittel 29 in Form der beiden Führungsstege 29' ausgeführt, die mit dem zweiten Positioniermittel 29 an den schon zuvor beschriebenen Ausführungen des Standrohrs 2 übereinstimmen.

In Figur 16, die das Standrohr 2 in einer gegenüber Figur 15 gedrehten Ansicht zeigt, ist unten am Standrohr 2 dessen erstes Positioniermittel 28 in Form der vorspringenden Nase 28' sichtbar. In Umfangs- und Axialrichtung versetzt dazu sind die abgestuften Anschläge 27 angeformt. Oben am Standrohr 2 sind die beiden schräg aufeinander zu verlaufenden Führungsstege 29' erkennbar, die dann in den axial weiter nach unten verlaufenden Schlitz 29" übergehen.

Zwecks einer kostengünstigen Massenfertigung und zur Gewährleistung der nötigen Stabilität und Haltbarkeit ist das Filtergehäuse 10 zweckmäßig ein Druckgussteil aus Leichtmetall, wie Aluminium oder Magnesium. Das Standrohr 2, die Stirnscheiben 31 und 32 und der Stützkörper 33 des Filtereinsatzes 3 und der Schraubdeckel 11 sind aus Kosten- und Gewichtsgründen zweckmäßig Spritzgussteile aus einem thermoplastischen Kunststoff, wie Polyamid.

**Bezugszeichenliste:**

| Zeichen | Bezeichnung |
|---|---|
| 1 | Flüssigkeitsfilter |
| 10 | Filtergehäuse |
| 11 | Schraubdeckel von 10 |
| 11' | Dichtring an 11 |
| 12 | Schraubgewinde |
| 13 | Rohflüssigkeitszulauf |
| 14 | Reinflüssigkeitsablauf |
| 15 | Flüssigkeitsablasskanal |
| 16 | Rastmittel an 11 |
| 17 | Rohrsockel |
| 18 | erstes Positioniermittel an 10 |
| 18' | Oberseite von 17 |
| 18" | Schlitz |
| | |
| 2 | Standrohr |
| 25 | unteres Ende |
| 25' | Dichtring an 25 |
| 26 | Rastmittel an 2 |
| 27 | Anschlag |
| 28 | erstes Positioniermittel an 2 |
| 28' | Nase |
| 29 | zweites Positioniermittel an 2 |
| 29' | Führungsstege |
| 29" | Schlitz |
| | |
| 3 | Filtereinsatz |
| 30 | Filterstoffkörper |
| 31 | erste (obere) Stirnscheibe |
| 32 | zweite (untere) Stirnscheibe |
| 33 | Stützkörper |
| 35 | Verschlusszapfen |
| 35' | Dichtring an 35 |
| 36 | Rastmittel an 31 |
| 36' | Rastmittel an 33 |
| 39 | zweites Positioniermittel an 3 |
| 39' | Nase |
| | |
| 4 | Filterumgehungsventil |
| 40 | Ventilkörper |
| 41 | Ventilsitz |
| | |
| 5 | Leerlaufsperrventil |
| 50 | Ventilkörper |
| 51 | Ventilsitz |
| | |
| 6 | vormontierte Einheit |

## Patentansprüche

1. Flüssigkeitsfilter (1), insbesondere Öl- oder Kraftstofffilter einer Brennkraftmaschine, mit einem Filtergehäuse (10) und einem darin auswechselbar angeordneten Filtereinsatz (3), wobei das Filtergehäuse (10) einen Rohflüssigkeitszulauf (13), einen zentralen Reinflüssigkeitsablauf (14) und einen exzentrischen Flüssigkeitsablasskanal (15) aufweist, wobei über dem Reinflüssigkeitsablauf (14) ein zentrales Standrohr (2) angeordnet ist, wobei der Filtereinsatz (3) auf das Standrohr (2) aufgesteckt ist, wobei der Filtereinsatz (3) an seiner dem Flüssigkeitsablasskanal (15) zugewandten Seite einen exzentrischen Verschlusszapfen (35) aufweist und wobei Positioniermittel vorgesehen sind, die beim Aufstecken des Filtereinsatzes (3) auf das Standrohr (2) den Verschlusszapfen (35) in Eingriff mit dem exzentrischen Flüssigkeitsablasskanal (15) führen,
**dadurch gekennzeichnet,**
- **dass** das zentrale Standrohr (2) ein mit dem Reinflüssigkeitsablauf (14) durch Zusammenstecken verbindbares separates Bauteil ist,
- **dass** erste Positioniermittel (18, 28) am zentralen Reinflüssigkeitsablauf (14) und an einem unteren Endbereich des Standrohrs (2) vorgesehen sind, die beim Einstecken des Standrohrs (2) in den Reinflüssigkeitsablauf (14) das Standrohr (2) in eine bestimmte Position in Umfangsrichtung relativ zum Filtergehäuse (10) führen,
- **dass** zweite Positioniermittel (29, 39) am Außenumfang des Standrohrs (2) und am Innenumfang des Filtereinsatzes (3) vorgesehen sind, die beim Aufstecken des Filtereinsatzes (3) auf das Standrohr (2) den Filtereinsatz (3) in eine bestimmte Position in Umfangsrichtung relativ zum Standrohr (2) führen, und
- **dass** die ersten und zweiten Positioniermittel (18, 28; 29, 39) so aufeinander abgestimmt sind, dass der Verschlusszapfen (35) am Filtereinsatz (3) in Eingriff mit dem exzentrischen Flüssigkeitsablasskanal (15) im Filtergehäuse (10) tritt.

2. Flüssigkeitsfilter nach Anspruch 1, **dadurch gekennzeichnet, dass** das Standrohr (2), der Filtereinsatz (3) und ein Filtergehäuseschraubdeckel (11) zu einer Einheit (6) vormontierbar sind, die insgesamt mit dem Filtergehäuse (10) unter selbsttätiger Findung von Verschlusszapfen (35) und Flüssigkeitsablasskanal (15) zu dem Flüssigkeitsfilter (1) verbindbar ist.

3. Flüssigkeitsfilter nach Anspruch 2, **dadurch gekennzeichnet, dass** an dem Standrohr (2) und dem Filtereinsatz (3) und an dem Filtereinsatz (3) und dem Filtergehäuseschraubdeckel (11) jeweils eine axial in und außer Eingriff bringbare Rastmittelanordnung (26, 36; 36', 16) vorgesehen, wovon die Rastmittelanordnung (36', 16) zwischen dem Filtereinsatz (3) und dem Filtergehäuseschraubdeckel (11) eine auf ein vorgebbares Maß begrenzte Drehmomente übertragende, eine Drehung relativ zueinander gestattende Rastmittelanordnung (36', 16) ist.

4. Flüssigkeitsfilter nach einem der Ansprüche 1 bis 3, **dadurch gekennzeichnet, dass** die ersten Positioniermittel (18, 28) filtergehäuseseitig durch einen Rohrsockel (17) mit einer schräg und/oder gestuft verlaufenden, in einen axialen Schlitz (18") übergehenden Oberseite (18') und standrohrseitig durch eine radial nach außen vorragende Nase (28') gebildet sind.

5. Flüssigkeitsfilter nach einem der Ansprüche 1 bis 4, **dadurch gekennzeichnet, dass** die zweiten Positioniermittel (29, 39) standrohrseitig durch ein Paar von symmetrisch zueinander schräg nach unten hin aufeinander zu laufenden, in einen axialen Schlitz (29") übergehenden Führungsstegen (29') und filtereinsatzseitig durch eine radial nach innen vorragende Nase (39') gebildet sind.

6. Flüssigkeitsfilter nach Anspruch 5, **dadurch gekennzeichnet, dass** der Filtereinsatz (3) einen hohlzylindrischen Filterstoffkörper (30) aufweist, in dessen hohlem Inneren ein gitterförmiger Stützkörper (33) angeordnet ist, mit dem die radial nach innen vorragende Nase (39') einstückig oder verbunden ist.

7. Flüssigkeitsfilter nach Anspruch 6, **dadurch gekennzeichnet, dass** der Filtereinsatz (3) zwei den hohlzylindrischen Filterstoffkörper (30) stirnseitig einfassende Endscheiben (31, 32) aufweist und dass mit einer der Endscheiben (31, 32) der Verschlusszapfen (35) einstückig oder verbunden ist.

8. Flüssigkeitsfilter nach einem der Ansprüche 1 bis 7, **dadurch gekennzeichnet, dass** das Standrohr (2) zumindest in der oberen Hälfte seiner Höhe durchbrochen ist und dass in einem oberen Endbereich des Standrohrs (2) ein Filterumgehungsventil (4) angeordnet ist.

9. Flüssigkeitsfilter nach Anspruch 8, **dadurch gekennzeichnet, dass** an der/einer in Einbaulage oberen Stirnscheibe (31) des Filtereinsatzes (3) ein mit einem Ventilkörper (40) des Filterumgehungsventils (4) zusammenwirkender Ventilsitz (41) ausgebildet ist.

10. Flüssigkeitsfilter nach einem der Ansprüche 1 bis 9, **dadurch gekennzeichnet, dass** in oder an einem unteren Bereich des Standrohrs (2) ein Leerlaufsperrventil (5) angeordnet ist.

11. Flüssigkeitsfilter nach Anspruch 10, **dadurch gekennzeichnet, dass** ein Ventilkörper (50) des Leerlaufsperrventils (5) mit dem als Ventilsitz (51) ausgebildeten unteren Ende (25) des Standrohrs (2) zusammenwirkt.

12. Flüssigkeitsfilter nach einem der Ansprüche 1 bis 11, **dadurch gekennzeichnet, dass** das Standrohr (2) bei seinem Zusammenstecken mit dem Reinflüssigkeitsablauf (14) derart mit dem Filtergehäuse (10) verrastbar oder verklemmbar ist, dass bei einem Abziehen des Filtereinsatzes (3) vom Standrohr (2) das Standrohr (2) im Reinflüssigkeitsablauf (14) verbleibt.

## Claims

1. A liquid filter (1), more particularly an oil or fuel filter of an internal combustion engine, comprising a filter housing (10) and a filter element (3) arranged therein such that it can be replaced, wherein the filter housing (10) includes an uncleaned liquid inlet (13), a central cleaned liquid outlet (14) and an eccentric liquid discharge channel (15), wherein a central stand pipe (2) is arranged above the cleaned liquid outlet (14), wherein the filter element (3) is mounted onto the stand pipe (2), wherein the filter element (3) includes an eccentric locking pin (35) on its side facing the liquid discharge channel (15), and wherein positioning means are provided which bring the locking pin (35) into engagement with the eccentric liquid discharge channel (15) when the filter element (3) is being mounted onto the stand pipe (2),
**characterized in**
**that** the central stand pipe (2) is a separate component that can be connected to the cleaned liquid outlet (14) by putting said component and said outlet together,
**that** first positioning means (18, 28) are provided at the central cleaned liquid outlet (14) and at a lower end region of the stand pipe (2), said first positioning means (18, 28) guiding the stand pipe (2) into a specific position in circumferential direction relative to the filter housing (10) when the stand pipe (2) is being inserted into the cleaned liquid outlet (14),
**that** second positioning means (29, 39) are provided on the outer perimeter of the stand pipe (2) and on the inner perimeter of the filter element (3), said second positioning means (29, 39) guiding the filter element (3) into a specific position in circumferential direction relative to the stand pipe (2) when the filter element (3) is being mounted onto the stand pipe (2), and
**that** the first and second positioning means (18, 28; 29, 39) are synchronized with each other in such a manner that the locking pin (35) at the filter element (3) comes into engagement with the eccentric liquid discharge channel (15) in the filter housing (10).

2. The liquid filter according to Claim 1, **characterized in that** the stand pipe (2), the filter element (3) and a filter housing screw cap (11) can be preassembled to form a unit (6) which, as a whole, can be connected to the filter housing (10) while automatically finding the locking pin (35) and the liquid discharge channel (15) leading to the liquid filter (1).

3. The liquid filter according to Claim 2, **characterized in that** a catch means arrangement (26, 36; 36', 16) that can be brought into and out of engagement in axial direction is provided at each of the stand pipe (2) and the filter element (3) as well as the filter element (3) and the filter housing screw cap (11), whereof the catch means arrangement (36', 16) between the filter element (3) and the filter housing screw cap (11) is a catch means arrangement (36', 16) that transmits torques limited to a specifiable extent and allow a rotation in relation to each other.

4. The liquid filter according to any one of Claims 1 to 3, **characterized in that** the first positioning means (18, 28) on the side of the filter housing are formed by a tube base (17) having a surface (18') that extends in a slanted and/or stepped manner and ends in an axial slot (18") and those on the side of the stand pipe are formed by a nose (28') projecting in a radially outward direction.

5. The liquid filter according to any one of Claims 1 to 4, **characterized in that** the second positioning means (29, 39) on the side of the stand pipe are formed by a pair of guide webs (29') that are tapering symmetrically towards each other in a slanted downward direction and end in an axial slot (29") and those on the side of the filter element are formed by a nose (39') projecting in a radially inward direction.

6. The liquid filter according to Claim 5, **characterized in that** the filter element (3) includes a hollow cylindrical filter medium body (30) in the hollow interior region of which a grid-type support body (33) is arranged, with the nose (39') that is projecting in a radially inward direction being formed integrally therewith or being connected thereto.

7. The liquid filter according to Claim 6, **characterized in that** the filter element (3) includes two end disks (31, 32) enclosing the hollow cylindrical filter medium body (30) on the face sides and that the locking pin (35) is formed integrally with or is connected to one of the end disks (31, 32).

8. The liquid filter according to any one of Claims 1 to 7, **characterized in that** the stand pipe (2) is perforated at least in the upper half of its height and that a filter bypass valve (4) is arranged in an upper end region of the stand pipe (2).

9. The liquid filter according to Claim 8, **characterized in that** a valve seat (41) cooperating with a valve body (40) of the filter bypass valve (4) is formed on the/an end disk (31) of the filter element (3), the end disk (31) being the upper one in the installed position.

10. The liquid filter according to any one of Claims 1 to 9, **characterized in that** a draining stop valve (5) is arranged in or at a lower region of the stand pipe (2).

11. The liquid filter according to Claim 10, **characterized in that** a valve body (50) of the draining stop valve (5) cooperates with the lower end (25) of the stand pipe (2), said lower end (25) being formed as a valve seat (51).

12. The liquid filter according to any one of Claims 1 to 11, **characterized in that** the stand pipe (2), when being put together with the cleaned liquid outlet (14), can be locked or clamped to the filter housing (10) in such a manner that the stand pipe (2) remains in the cleaned liquid outlet (14) when the filter element (3) is being pulled off from the stand pipe (2).

## Revendications

1. Filtre à liquide (1), en particulier filtre à huile ou à carburant d'un moteur à combustion, comprenant un boîtier de filtre (10) et un insert de filtre (3) disposé dedans de façon amovible, dans lequel le boîtier de filtre (10) présente une alimentation de liquide brut (13), une sortie centrale de liquide pur (14) et un canal d'évacuation de liquide excentrique (15), dans lequel un tube vertical (2) central est disposé au-dessus de la sortie centrale de liquide pur (14), dans lequel l'insert de filtre (3) est enfiché sur le tube vertical (2), dans lequel l'insert de filtre (3) présente un bouchon de fermeture (35) excentrique sur son côté tourné vers le canal d'évacuation de liquide excentrique (15) et dans lequel des moyens de positionnement sont prévus qui, lors de l'enfichage de l'insert de filtre (3) sur le tube vertical (2), guident le bouchon de fermeture (35) en prise avec le canal d'évacuation de liquide excentrique (15),
**caractérisé en ce**
- **que** le tube vertical (2) central est une pièce séparée pouvant être reliée à la sortie de liquide pur (14) par enfichage,
- **que** des premiers moyens de positionnement (18, 28) sont prévus sur la sortie centrale de liquide pur (14) et sur une partie d'extrémité inférieure du tube vertical (2), qui, lors de l'enfichage du tube vertical (2) dans la sortie centrale de liquide pur (14), guident le tube vertical (2) dans une position définie dans le sens périphérique par rapport au boîtier de filtre (10),
- **que** des deuxièmes moyens de positionnement (29, 39) sont prévus sur le pourtour extérieur du tube vertical (2) et sur le pourtour intérieur de l'insert de filtre (3), qui, lors de l'enfichage de l'insert de filtre (3) sur le tube vertical (2), guident l'insert de filtre (3) dans une position définie dans le sens périphérique par rapport au tube vertical (2), et
- **que** les premier et deuxième moyens de positionnement (18, 28 ; 29, 39) sont ainsi déterminés entre eux que le bouchon de fermeture (35) sur l'insert de filtre (3) vient en prise avec le canal d'évacuation de liquide excentrique (15) dans le boîtier de filtre (10).

2. Filtre à liquide selon la revendication 1, **caractérisé en ce que** le tube vertical (2), l'insert de filtre (3) et un couvercle vissé du boîtier de filtre (11) peuvent être prémontés en une unité (6) qui peut être reliée au filtre à liquide (1) dans son intégralité avec le boîtier de filtre (10) par découverte automatique du bouchon de fermeture (35) et du canal d'évacuation de liquide excentrique (15).

3. Filtre à liquide selon la revendication 2, **caractérisé en ce qu'**un agencement de moyens d'encliquetage (26, 36 ; 36', 16) axial et pouvant être respectivement mis hors de prise est prévu sur le tube vertical (2) et l'insert de filtre (3) et sur l'insert de filtre (3) et le couvercle vissé du boîtier de filtre (11), duquel l'agencement de moyens d'encliquetage (36', 16) entre l'insert de filtre (3) et le couvercle vissé du boîtier de filtre (11) est un agencement de moyens d'encliquetage (36', 16) transmettant des couples de rotation limités à une dimension prédéfinie, permettant une rotation entre eux.

4. Filtre à liquide selon l'une des revendications 1 à 3, **caractérisé en ce que** les premiers moyens de positionnement (18, 28) sont formés côté boîtier de filtre par un socle de tube (17) avec un dessus (18') de biais et/ou étagé, passant dans une fente axiale (18"), et côté tube par un ergot (28') faisant saillie radialement vers l'extérieur.

5. Filtre à liquide selon l'une des revendications 1 à 4, **caractérisé en ce que** les deuxièmes moyens de positionnement (29, 39) sont formés côté tube vertical par une paire de montants de guidage (29') symétriques entre eux se rejoignant en biais vers le bas, passant dans une fente axiale (29") et côté insert de filtre par un ergot (39') faisant saillie radialement vers l'intérieur.

6. Filtre à liquide selon la revendication 5, **caractérisé en ce que** l'insert de filtre (3) présente un corps de tissu filtrant (30) cylindrique creux dans l'intérieur creux duquel est disposé un corps de support (33) en forme de grille, avec lequel l'ergot (39') faisant saillie radialement vers l'intérieur est monobloc ou est relié.

7. Filtre à liquide selon la revendication 6, **caractérisé en ce que** l'insert de filtre (3) présente deux disques d'extrémité (31, 32) enchâssant le corps de tissu filtrant (30) cylindrique creux par l'avant et que le bouchon de fermeture (35) est monobloc ou relié à un des disques d'extrémité (31, 32).

8. Filtre à liquide selon l'une des revendications 1 à 7, **caractérisé en ce que** le tube vertical (2) est percé au moins dans la moitié supérieure de sa hauteur et qu'une soupape de contournement de filtre (4) est disposée dans une partie d'extrémité supérieure du tube vertical (2).

9. Filtre à liquide selon la revendication 8, **caractérisé en ce qu'**un siège de soupape (41) coopérant avec un corps de soupape (40) de la soupape de contournement de filtre (4) est formé sur le/un disque avant (31) de l'insert de filtre (3) qui est supérieur dans la position de montage.

10. Filtre à liquide selon l'une des revendications 1 à 9, **caractérisé en ce qu'**une soupape de blocage de marche à vide (5) est disposée dans ou sur une partie inférieure du tube vertical (2).

11. Filtre à liquide selon la revendication 10, **caractérisé en ce qu'**un corps de soupape (50) de la soupape de blocage de marche à vide (5) coopère avec l'extrémité inférieure (25) du tube vertical (2) formée en tant que siège de soupape (51).

12. Filtre à liquide selon l'une des revendications 1 à 11, **caractérisé en ce que** le tube vertical (2), lors de son enfichage avec la sortie de liquide pur (14) peut être encliqueté ou serré avec le boîtier de filtre (10) de telle façon que lorsque l'on retire l'insert de filtre (3) du tube vertical (2), le tube vertical (2) reste dans la sortie de liquide pur (14).
